(19) Europäisches Patentamt
European Patent Office
Office européen des brevets

(11) Publication number: **0 386 663 A1**

# (12) EUROPEAN PATENT APPLICATION

(21) Application number: **90104158.2**

(22) Date of filing: **03.03.90**

(51) Int. Cl.5: **C08J 9/14, C08L 101/00, B29C 67/22**

(30) Priority: **06.03.89 US 319550**

(43) Date of publication of application: **12.09.90 Bulletin 90/37**

(84) Designated Contracting States: **AT BE CH DE ES FR GB IT LI LU NL SE**

(71) Applicant: **U.C. INDUSTRIES, INC.**
**2 Sylvan Way**
**Parsippany New Jersey 07054(US)**

(72) Inventor: **Breindel, Raymond M.**
**11383 Sagebrush Avenue**
**Uniontown, Ohio 44685(US)**

(74) Representative: **Türk, Gille, Hrabal**
**Brucknerstrasse 20**
**D-4000 Düsseldorf 13(DE)**

## (54) Method of preparing styrene foams.

(57) A foam body being characterized as having a density of between about 0.9 to about 3.5 pounds per cubic foot, and a process for preparing the foam body, is described.

The process comprises the steps of

(A) heat plastifying a mixture of a thermoplastic resin and at least one halocarbon polymer;

(B) adding at least one blowing agent to the plastified resin;

(C) forming a blowable resin mixture by uniformly mixing the blowing agent and the halocarbon powder in the resin under a pressure sufficient to prevent blowing of the resin;

(D) extruding the mixture into a region wherein the blowable resin mixture expands into a foam body; and

(E) cooling the foam body.

EP 0 386 663 A1

# FOAM BODIES AND PROCESS FOR PREPARING SAME

## FIELD OF THE INVENTION

The present invention relates to extruded foams and a process for preparing the foams which are in the form of billets or boards and which are characterized as having a density between about 0.9 and about 3.5 pounds per cubic foot.

## BACKGROUND OF THE INVENTION

Extruded synthetic resinous foams are highly desirable for many applications including thermal insulation, decorative purposes, packaging and the like. One particularly important application for styrene polymer foams is in the field of thermal insulation. In this application, it is desirable that the insulating value of the foam be maintained for as long a period as possible and that the foam have dimensional stability. The present invention relates to polymer foams which are the so-called "extruded foams". The extruded foams generally have a fairly uniform cell size and are thus particularly useful for thermal insulation.

Another important characteristic of polymer foam is the density of the foam which generally may vary from about 1 to about 5 or more pounds per cubic foot. Densities of greater than about 2 pounds per cubic foot for polystyrene foams are common, and many such materials are commercially available. The relationship between density and cell size is an important consideration when the foamed product is to be utilized for thermal insulation. It generally is difficult to prepare foamed structures having low density (i.e., less than two pounds per cubic foot) while maintaining the desirable small cell sizes. Generally, as the density of the structure is decreased, the cell size becomes relatively larger, and attempts to obtain low density materials with relatively small cell size by controlling the amount of blowing agent and the temperature of the extrudate have not been completely successful. As the cell sizes are reduced, the material tends to have a higher density.

Nucleating agents are employed during extrusion to control cell sizes in styrene polymer foams. It is believed that the nucleating agents act as a site for cell formation. Commonly, nucleating agents are particulate materials which are added to the resin before foaming. Nucleating agents which have been used in foam production include talc, calcium silicates, and the like.

U.S. Patent 3,188,295 relates to the production of cellular articles from thermoplastic organic polymers. Indigotin and/or blue copper phthalocyanine pigments are disclosed as nucleating agents.

U.S. Patent 3,065,190 relates to the method for producing an extruded polyethylene film. The patent discloses polymers of a monovinyl aromatic compound for use as nucleating agents. These polymers are finely divided or particulate in form. The patent further discloses that these polymers may be used in combination with another nucleating agent such as aluminum stearate, zinc stearate or finely divided calcium silicate, diatomaceous earth, calcium carbonate, barium sulfate and the like.

U.S. Patent 3,413,387 relates to a process for preparing foam plastic shapes. The patent discloses nucleating agents which are made up of materials which will react to form carbon dioxide and water. Carbon dioxide liberating materials are disclosed as ammonium, alkali or alkaline earth metal carbonates or bicarbonates. The other material is an acid or acid reacting salt, such as boric acid, sodium dihydrogen phosphate, fumaric acid, malonic acid, oxalic acid, citric acid and the like.

U.S. Patent 3,224,984 relates to the production of a polystyrene cellular material. Polyethylene wax is disclosed as a nucleating agent.

U.S. Patent 4,229,396 relates to thermoplastic foams of increased cell size. The patent discloses a natural or synthetic wax as cell enlarging agent.

## SUMMARY OF THE INVENTION

A foam body being characterized as having a density of between about 0.9 to about 3.5 pounds per cubic foot, and a process for preparing the foam body, is described.

The process comprises the steps of

(A) heat plastifying a mixture of a thermoplastic resin and at least one halocarbon polymer;

(B) adding at least one blowing agent to the plastified resin;

(C) forming a blowable resin mixture by uniformly mixing the blowing agent and the halocarbon powder in the resin under a pressure sufficient to prevent blowing of the resin;

(D) extruding the mixture into a region wherein the blowable resin mixture expands into a foam body; and

(E) cooling the foam body.

In one embodiment, the mixture is extruded into a region of sub-atmospheric pressure. The region of subatmospheric pressure is formed by an elongated chamber with the blowable resin mixture passing through a die at one end of such chamber and such foam body passing through a pool of water at the opposite end of the chamber. The foam body produced by this invention is characterized as having the desired densities, relatively small average cell sizes such as less than or equal to about 0.5 mm., improved and higher compressive strengths, and higher cell volumes.

## BRIEF DESCRIPTION OF THE DRAWINGS

In the annexed drawings:

Fig. 1 is a schematic broken side elevation of preferred apparatus for practicing the present invention;

Fig. 2 is an enlarged fragmentary top plan view of the fan-shape-arcuate slot die and shaping mechanisms at the die end of the vacuum chamber; and

Fig. 3 is a schematic illustration of one of the pneumatic piston-cylinder assemblies for floating the shaping rolls or subsequent upper conveyor.

## DESCRIPTION OF THE PREFERRED EMBODIMENTS

Throughout the specification and claims, all parts and percentages are by weight unless otherwise indicated.

The thermoplastic resins which are extruded and foamed in accordance with the present invention comprise alkenyl-substituted aromatic resins, (homopolymers and copolymers), polyphenylene ethers, polyvinyl chloride, vinylidene chloride resins such as copolymers of vinylidene chloride (80 parts) and acrylonitrile (20 parts), polyolefin resins such as polyethylene and copolymers of ethylene and vinyl acetate or ethyl acrylate, etc. Mixtures of such resins may be prepared and foamed in accordance with the process of the invention. For example, mixtures of a styrene resin and a polyphenylene ether can be foamed to produce foam bodies by the process of the invention. The preferred thermoplastic resins are the alkenyl-substituted aromatic resins.

The alkenyl-substituted aromatic resins which are extruded and foamed in accordance with the present invention are polymers which comprise at least 50% of a monomer which is at least one alkenyl aromatic compound characterized by the general formula

$Ar\text{-}C(R) = CH_2$ (I)

wherein Ar represents an aromatic hydrocarbon group or an aromatic halohydrocarbon group of the benzene series and R is hydrogen or a methyl group. The remaining monomer used in the preparation of the polymer comprises at least one ethylenically unsaturated monomer which is copolymerizable with the aromatic compound.

In one embodiment, the alkenyl aromatic compound of Formula I may be represented by the following formula

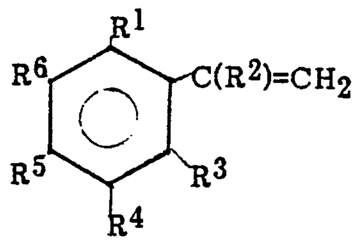

(II)

wherein $R^1$, $R^3$, $R^4$, $R^5$ and $R^6$ are each independently hydrogen, chlorine, bromine, or alkyl groups containing from 1 to about 4 carbon atoms, and $R^2$ is hydrogen or methyl, with the proviso that a total number of carbon atoms in the monomer does not exceed 12.

Examples of such alkenyl-substituted aromatic monomers include styrene, alpha-methylstyrene, o-methylstyrene, m-methylstyrene, p-methyl styrene, o-chlorostyrene, p-chlorostyrene, 2,6-dichlorostyrene, o-bromostyrene, etc. Examples of ethylenically unsaturated monomers which are copolymerizable with the above styrene derivatives include methylmethacrylate, acrylonitrile, maleic anhydride, citraconic anhydride, itaconic anhydride, etc.

The preferred alkenyl-substituted aromatic resin for use in the present invention is a styrene resin. Styrene resins may be homopolymers of a styrene or copolymers of styrene with one or more copolymerizable ethylenically unsaturated monomers as described above. Such polymers and copolymers of styrene are available from a variety of commercial sources in a variety of molecular weights. The molecular weights of such polymers can be determined by several methods well known to those skilled in the art, such as intrinsic viscosity, light scattering, and ultracentrifuge sedimentation. The flow rate of the melted polymer through an orifice, sometimes described as melt flow index (MFI) also may be used to compare molecular weight relationships. MFI is a low cost, easily performed technique. Details may be found in a number of publications, such as Principles of Polymer Chemistry, by P. J. Flory, Cornell University Press, Ithaca, New York, 1953. Polymers having weight average molecular weights of from about 100,000 to about 500,000 are useful, with preferred about 150,000 to about 450,000 and most preferred about 250,000 to about 350,000.

Useful styrene resins (also referred to herein as polystyrenes) are available commercially from a variety of sources, and the resins are available with different properties such as melt flow index. For example, polystyrenes are available from ARCO Chemical Company under the general designation "DYLENE", for example DYLENE 8, and from Polysar Ltd., Sarnia, Ontario.

In one embodiment, the properties of the extruded, expanded foamed products of the present invention can be controlled and modified by the selection of the molecular weight of the resins. For example, the preparation of lower density foam polystyrene bodies is facilitated by using higher molecular weight resins whereas the preparation of higher density foam bodies is facilitated by the use of lower molecular weight or higher viscosity resins.

Specific examples of polymers of styrene which are copolymers include those obtained from mixtures such as: 70% styrene and 30% acrylonitrile; 80% styrene and 20% vinyl toluene; 75% styrene and 25% methylmethacrylate; etc.

The halocarbon powders of the present invention are used as nucleating agents. Nucleating agents act to control the primary cell size. In the present invention, the average cell size of the foam body is less than 0.5 mm., preferably less than 0.3 mm., and most preferably less than 0.25 mm.

The halocarbon powders of the present invention are halogen containing polymers which have been ground to a certain particle size. The polymers may be made into the powders useful in the present invention by any process known to those in the art. The powders are of an average particle size of less than 2 microns. In a preferred embodiment the average particle size is from about 0.25 to about 1.75 microns, with about 0.5 to about 1.5 microns being preferred. The phrase "average particle size" is meant to encompass the particle size of the powder under blending conditions. During storage, handling and transport, powders may form associations known as agglomerates. These agglomerates may have an apparent particle size larger than the above specified range. However, the powders useful in the present invention are defined by particle size upon blending. The halocarbon powders useful in the present invention have an inherent density in the range between about 1.75 to about 2.75.

The halocarbon powders useful in the present invention may contain any halogen atoms. However, preferred halocarbon powders are chlorine or fluorine containing powders, with fluorine containing powders (fluorocarbon powders) being most preferred. Examples of halocarbon powders useful in the present invention include, but are not limited to, polytetrafluoroethylene, fluorinated ethylene propylene copolymers,

perfluoroalkoxy resins, polychlorotrifluoroethylenes, ethylene-chlorotrifluoroethylene copolymers, ethylene-tetrafluoroethylene copolymers, polyvinylidene fluorides, and polyvinyl fluorides. In a preferred embodiment the halocarbon powder is a fluorocarbon micro powder available from the Du Pont Chemical Company and is known as DLX-6000. DLX-6000 has the following characteristics: inherent density, 2.3; melting range, 320° C-340° C; and typical size on blending, less than 1 micron.

The halocarbon powders used in the present invention are generally present in the resin in the amounts from about 0.01 to about 0.3 parts of halocarbon powder per 100 parts of resin. Preferably from about 0.01 to about 0.15 parts of the halocarbon powder per 100 parts of resin is incorporated into the foamable resin.

As stated previously, blowing agents are utilized in the present invention to achieve the cellular structure. Blowing agents which are useful in the present invention are selected from the group consisting of halohydrocarbons; halocarbons; inert gases; alkanes having from 1 to about 8 carbon atoms; and chemical blowing agents.

Halocarbons which are useful as blowing agents in the present invention are materials containing carbon and halogen atoms. Examples of halocarbons are vinyl chloride, methyl chloride, ethyl chloride and materials known as chlorofluorocarbons. Examples of chlorofluorocarbons (CFCs) which have been utilized as blowing agents include CFC-11 which is trichlorofluoromethane, CFC-12 which is dichlorodifluoromethane, and CFC-113 which is 1,2,2-tri-fluoro-1,1,2-trichloroethane.

Halohydrocarbons, as the name implies, are chlorofluorocarbons which contain at least one hydrogen atom. These materials have been generally referred to as "soft CFCs", "HCFCs" and "HFCs". Examples of halohydrocarbons include chlorodifluoromethane (HCFC-22), 1 ,1-dichloro-2,2,2-trifluoroethane (HCFC-123), 1-chloro-1,1-difluoroethane (HCFC-142b), 1,1,1,2-tetrafluoroethane (HCFC-134a) and 1,1-dichloro-1-fluoroethane (HCFC-141b).

Inert gases are also useful as blowing agents in the present invention. Examples of inert gases are nitrogen, argon, neon and carbon dioxide.

Alkanes are also useful as blowing agents in the present invention. Examples of alkanes which are useful are ethane, propane, butane, pentane, hexane, heptane and octane.

Chemical blowing agents are chemicals which, under processing conditions, decompose to release a gas. This gas acts as the blowing agent which forms the cellular structure of foam bodies. Examples of chemical blowing agents include Azo-dicarbonamide; 4,4-oxybis (benzenesulfonyl hydrazide); p-toluenesulfonyl semicarbazide; and 5-phenyltetrazole. Preferred blowing agents are chlorodifluoromethane; dichlorodifluoromethane; 1-chloro-1,1 -difluoroethane; 1,1,1,2-tetrafluoroethane; 2-chloro-1,1,1,2-tetrafluoroethane or mixtures thereof.

In a preferred embodiment, the above blowing agents are used in combination. The mixtures of blowing agents are useful in preparing the foams of the present invention. Mixtures of blowing agents comprising from about 25% to 75% of 1-chloro-1,1-difluoroethane or 1,1,1,2-tetrafluoroethane or 2-chloro-1,1,1,2-tetrafluoroethane, and about 25% to 75% of at least one of CFC-12 and HCFC-22 are useful. Particularly useful mixtures of blowing agents include mixtures comprising: 70-30% of 1,1,1,2-tetrafluoroethane; 50-70% of 1-chloro-1,1-difluoroethane and 30-5-% of chlorodifluoromethane; 60-80% of 1-chloro-1,1-difluoroethane and 20-40% of dichlorodifluoromethane; the combination of carbon dioxide with a mixture comprising 60% of 1-chloro-1,1-difluoroethane and 40% of dichlorodifluoromethane and; the combination of carbon dioxide and a mixture comprising 68% of 1-chloro-1,1-difluoroethane and 32% of dichlorodifluoromethane; etc. The combination of carbon dioxide with the fluorocarbon blowing agents results in the production of extruded expanded polystyrene bodies characterized as having smaller cell sizes when compared to similar density bodies produced with similar fluorocarbons but without carbon dioxide. Additionally, the blowing agent blends including carbon dioxide produce extruded expanded polystyrene bodies characterized by improved compressive strengths at comparable densities. When carbon dioxide is used in combination with one or more halocarbons, from about 0.4 to about 1.5% by weight of carbon dioxide is used based on the weight of the resin. Extruded expanded polystyrene bodies of acceptable characteristics are obtained utilizing the above blowing agent and blowing agent mixtures, and there is no necessity to use blowing agents having high volatility and high diffusion rates through the polystyrene such as methyl chloride, ethyl chloride, etc. Alcohols are not required and are generally not included in the blowable mixtures. Examples of alcohols included in blowing agent mixtures of the prior art but which are not used herein include methanol, ethanol and isopropyl alcohol.

The blowing agents of the present invention are used in an amount of about 3 to about 16 parts by weight based on the weight of the thermoplastic resin. Preferably, the blowing agents are used in the amount of about 6 to about 16 parts by weight based on the weight of the thermoplastic resin.

The blowing agent utilized in the process may be added to the alkenyl-substituted aromatic resin in any conventional manner. In one embodiment, the blowing agent or blowing agent mixture may be directly

injected into a heat plastifying and mixing apparatus such as an extruder. When more than one blowing agent is to be utilized, each of the blowing agents may be separately injected into the heat-plastified resin. In one preferred embodiment, tandem extruders shown generally at 10 in Fig. 1 are utilized with the primary extruder used to introduce the blowing agent and mixing and the second extruder to control the mixing and cooling of the material. In addition to the plastified resin, halocarbon powder(s) and blowing agent(s), the blowable resin mixtures may contain, and generally do contain, other additives which are included to modify certain characteristics and/or properties. Plasticizers may also be added to the foamable mixture, and examples include liquid paraffin, hydrogenated coconut oil, etc. Other useful additives include flame-retardant chemicals, stabilizers, etc.

From the extruder, the heat-plastified resin-blowing agent mixture is extruded into a region where the mixture expands. Although the region may be at atmospheric pressure, in a preferred embodiment the region is of reduced pressure which is at subatmospheric pressure. That is, the region comprises a vacuum chamber wherein the pressure can be controlled at desired levels to allow the blowable resin mixture to expand into a foam body within the vacuum chamber. The pressure within the vacuum chamber can be varied to facilitate the formation of foamed bodies having different but desired characteristics including cell size, cell volume and density. The pressure within the vacuum chamber generally will be maintained at less than 27 in. of Hg absolute and generally within the range of from about 2 to about 27 in. of Hg absolute. In some applications, the pressure will be maintained between about 2 and 20 in. of Hg absolute. In general, as the vacuum is increased (lower pressure), foaming of the mixture is facilitated and lower density foams are produced.

In one preferred embodiment of the invention as seen in Fig. 1, the die end 12 of the secondary extruder described above is designed to fit into, and seal off, the upper end 13 of an inclined tunnel 14 that forms a vacuum chamber or barometric leg 15. The lower end 16 of the tunnel is immersed in a pool of water 17 that seals off the other end of the vacuum chamber. The pool of water provides a mechanism of removing the finished board from the chamber without breaking the vacuum. The extruded polystyrene foamed body formed within the vacuum chamber is advanced through the chamber, through the water and then out of the vacuum chamber to atmospheric pressure on the other side of the water seal. In addition to providing a mechanism for maintaining the vacuum within the chamber, the pool of water is used to cool the foam body within the chamber.

In general operation, the extruded foam exits the die 20 seen more clearly in Fig. 2, and expansion of the mixture and shaping of the foam are controlled by arcuate rolls 22 positioned above and below the plane of the die orifice. The foam indicated at 24 exiting the die is sized for thickness, and spread out to its final width by the illustrated sets of upper and lower rolls which comprise driven wafers 25 rotating on curved axles. As illustrated, there are five such wafer roller sets above and below the foam as it exits the fan-shape die 20. Further thickness and flatness control is provided by passing the foamed panel through paired upper and lower conveyor belts 27. Foam density is determined in part by controlling the vacuum level. After the extruded foam has been sized for thickness, width and flatness, the foam is carried through the water beneath conveyor 30 driven at 31, and as the foam travels through the water it is cooled and becomes more rigid. The foam can be carried through the water seal by any convenient apparatus such as conveyor belt illustrated. In one embodiment, the foam body is carried through the water by an upper conveyor belt, the foam being held against the belt by its own flotation properties. In the illustrated preferred embodiment, the extrusion die 20 is a fan-shape die having an arcuate slot orifice 32, and the mixture exiting such fan-shape die is confined by floating shaping rolls shown.

As seen in Figs. 2 and 3, in order to more precisely control the rolls 22 as well as the conveyors 27, they may be mounted for floating movement by piston-cylinder assemblies 34. The rods of such assemblies as seen at 36 are connected to brackets 37 in turn supporting the respective rolls or the conveyor. There may be a piston-cylinder assembly for each.

Air may be supplied to the blind end or bottom of each cylinder through line 40 from source 41 through pressure regulator 42 and control valve 43. Thus a controlled pressure may be provided to the lower end of each cylinder elevating a roll 22 against its weight causing the roll essentially to float. When such floating is achieved pressure is applied to the rod end through line 45 from source 46 through regulator 47 and control valve 48. This precisely controls the pressure of the roll against the foaming body. Because of the different radius size of each roll 22, the tare or dead weights will differ. Once floating is achieved only a slight pressure differential is employed so that the force exerted by the roll is quite gentle.

For a more detailed disclosure of a vacuum chamber, shaping mechanism and fan-shape die which may be employed, reference may be had to prior U.S. Patents 4,199,310; 4,234,529; and 4,364,722.

The foam bodies prepared in accordance with the invention are characterized generally as follows:

Density:

about 0.9 to about 3.5 Pcf, preferably about 0.9 to about 2, or between about 0.9 to about 1.6;
Average Cell Size:
less than 0.5 mm.; preferably less than 0.3 mm.
Cell Volume:
>100,000/cu.in. at lower densities; preferably 150,000/cu.in. at lower densities;
>200,000/cu.in. at densities of from about 1.3 to 1.6;
>250,000/cu.in. at densities of from about 1.6 to 2.0;
>300,000/cu.in. at densities above 2.0

The following examples illustrate the process of the present invention and the foam bodies obtained thereby. The general procedure and the apparatus utilized in the following examples, unless otherwise indicated, is as follows. A plastified mixture of virgin polystyrene resin, reground polystyrene resin, halocarbon powder and flame-retardant is prepared, and a blowing agent is incorporated into the plastified resin mixture to form a blowable resin mixture. The blowable resin mixture then is extruded through a die into one end of an elongated chamber maintained under vacuum whereupon the foamable mixture expands under controlled conditions to form a continuous board about 24 inches wide and with a thickness which can be varied as desired.

In the examples, the die is a fan-shaped die having a chord length of 8.66 inches, a radius of 5 inches and included angle of 120°. As the blowable mixture is extruded into the vacuum chamber, expansion of the foamable mixture is controlled by arcuate rolls positioned above and below the plane to form a continuous board of about 1.5 to 2.0 inches in thickness as desired, and about 24 inches wide. Other thicknesses of board may be obtained by adjusting the die opening and the arcuate rolls position. The continuous foam board is passed through the vacuum chamber through a pool of water where the foam board cools and becomes more rigid. After passing through the pool of water, the foam body is withdrawn from the opposite end of the chamber, trimmed and cut as desired.

The foamed boards which are recovered from the vacuum chamber in accordance with the process of the present invention are evaluated for density, cell size, compressive strength, k-factor, etc., by techniques known in the art. The average cell size is an average of the cell sizes as determined in the X, Y and Z directions. The "X" direction is the direction of extrusion; the "Y" direction is the cross machine direction; and the "z" direction is the thickness. The compressive strength of the foam bodies of the present invention are determined utilizing ASTM Test C165-83 entitled "measuring Compressive Properties of Thermal Insulation".

The remaining details of the process and of the apparatus with respect to the specific examples are contained in the description of the examples.

## Example 1

Prepare a plastified mixture of 70 parts of a virgin polystyrene resin [ARCO Dylene D8 having a melt flow index (MFI) of 5.0], 18.5 parts by weight of a reground polystyrene, 0.05 of a fluorocarbon micropowder (DLX-6000) and 0.8 part of a flame-retardant (hexabromocyclododecane). Incorporated 10.0 part of dichlorotrifluoromethane (CFC-12) into the plastified mixture to form the blowable resin mixture. Prepare the foam body as defined by the general procedure above wherein the mixture is extruded into a region at subatmospheric pressure. Some characteristics of the foam bodies are revealed in Table I.

## Example 2

Follow the procedure of Example 1 using 70 parts of the virgin polystyrene, 18.5 parts of the reground polystyrene, 0.05 parts of DLX-6000, 0.80 parts of the flame retardant, and 10 parts of CFC-12. Some characteristics of the foam body are revealed in Table I.

## Example 3

Follow the procedure of Example 1 using 70 parts of the virgin polystyrene, 18.5 parts of the reground

polystyrene, 0.087 parts of DLX-6000, 0.8 parts of the flame retardant and 10 parts of a mixture of 40% by weight HCFC-22 and 60% by weight HCFC-142b.

## Comparative Examples 4-7

The general procedure described above is repeated utilizing the recipe, throughput rate, die pressure and vacuum summarized in Table II. In these examples talc is used as a nucleating agent. Some of the characteristics of the foam boards of these examples are summarized in Table II.

TABLE I

| | Example 1 | Example 2 | Example 3 |
|---|---|---|---|
| Throughput rate (lb/hr) | 735.0 | 735.0 | 860 |
| Vacuum (in.Hg.Abs.) | 22.0 | 21.7 | 24.6 |
| Product | | | |
| Actual Thickness (in.) | 1.92 | 1.94 | 2.0 |
| Density (Pcf) | 2.19 | 2.14 | 2.16 |
| Ave. cell size (mm.) | 0.18 | 0.18 | 0.32 |
| Cell Volume/cu.in. | 1449851 | 1301912 | 250897 |
| Compressive strength (fresh, PSI) | 34.72 | 30.26 | |
| k-Factor (fresh) | 0.120 | 0.122 | |

TABLE II

| Comparative Polystyrene Foam Board Characteristics | | | | |
|---|---|---|---|---|
| | 4 | 5 | 6 | 7 |
| Recipe (Pbw) | | | | |
| Virgin Resin | ARCO | ARCO | ARCO | ARCO |
| Regrind (%) | 13.80 | 13.80 | 13.80 | 14.30 |
| Talc (%) | 0.24 | 0.37 | 0.37 | 0.30 |
| Flame-Retardant | 0.90 | 0.92 | 0.92 | 0.85 |
| Blowing Agent (Pbw) | | | | |
| 40% F-22/60% F-142(b) | 11.1 | 11.1 | 11.1 | — |
| CFC-12 | — | — | — | 10.1 |
| Throughput rate (lb/hr) | 768 | 776 | 795 | 750 |
| Die Pressure (PSIG) | 469 | 471 | 459 | 692 |
| Vacuum (in.Hg.Abs.) | 14.2 | 21.2 | 21.0 | 22.4 |
| Product | | | | |
| Actual Thickness (in.) | 2.050 | 2.040 | 2.020 | 2.060 |
| Density (Pcf) | 1.51 | 1.87 | 1.93 | 2.08 |
| Ave. cell size (mm.) | 0.40 | 0.32 | 0.34 | 0.29 |
| Cell Volume/cu.in. | 132,216 | 249,623 | 212,283 | 336,628 |
| Compressive strength (fresh, PSI) | 24.09 | 36.67 | 37.92 | 35.24 |
| k-Factor (fresh) | 0.163 | 0.153 | 0.154 | 0.135 |

As can be seen from the results of Tables I and II, foam polystyrene boards produced with CFC-12 and

DLX-6000 (Examples 1 and 2) have an average cell size of 0.18 mm. as compared to an average cell size of 0.29 mm. for such boards produced with CFC-12 and talc (Example 7), even though the talc concentration used was much higher than that of DLX-6000 (0.03 parts and 0.05 parts, respectively). Similarly, foam polystyrene boards made with an HCFC-22/HCFC-142b blowing agent mixture and DLX-6000 (Example 3) have an average cell size of 0.32 mm. as compared to average cell size of 0.40, 0.32 and 0.34 mm. (Examples 4-6) for the same blowing agent mixture and talc, even though the talc concentration was much higher than that of the DLX-6000 (0.24-0.37 parts and 0.087 parts, respectively).

As is apparent from the above description and examples, the process of the present invention for preparing foamed polystyrene bodies such as boards and billets utilizing a nucleating agent comprising a halocarbon powder results in foamed bodies having acceptable and, in some instances, improved characteristics. In the process of the present invention, the use of a halocarbon powder generally results in the formation of foam boards and billets having improved characteristics when compared to boards and billets prepared utilizing talc as the nucleating agent.

While the invention has been explained in relation to its preferred embodiments, it is to be understood that various modifications thereof will become apparent to those skilled in the art upon reading the specification. Therefore, it is to be understood that the invention disclosed herein is intended to cover such modifications as fall within the scope of the appended claims.

## Claims

1. A process for preparing an extruded elongate foam body characterized as having a density of between about 14.4 and about 56.1 kg/m$^3$ (between about 0.9 and about 3.5 pounds per cubic foot) which comprises the steps of

(A) heat plastifying a mixture of at least one thermoplastic resin and at least one fluorocarbon powder;

(B) directly injecting to the plastified resin from about 3 to about 16 parts by weight based on the weight of the thermoplastic resin of at least one blowing agent selected from the group consisting of halohydrocarbons; halocarbons; inert gases; and alkanes having from 1 to about 8 carbon atoms;

(C) forming a blowable resin mixture by uniformly mixing the blowing agent and the fluorocarbon powder in the resin under a pressure sufficient to prevent blowing of the resin;

(D) extruding the mixture into a region wherein the blowable resin mixture expands into a foam body; and

(E) cooling the foam body.

2. The process of claim 1 wherein the fluorocarbon powder has an average particle size of from about 0.1 to about 5 microns.

3. The process of claims 1 or 2 wherein the thermoplastic resin is an alkenyl-substituted aromatic resin.

4. The process of claims 1, 2 or 3 wherein the blowing agent is selected from the group consisting of chlorodifluoromethane; dichlorodifluoromethane; 1-chloro-1,1-difluoroethane; 1,1,1,2-tetrafluoroethane; 2-chloro-1,1,1,2-tetrafluoroethane, or mixtures thereof.

5. The process of claims 1 or 2 to 4 wherein the fluorocarbon powder is present in an amount from about 0.01 to 0.3 parts by weight based on the weight of the thermoplastic resin.

6. The process of claims 1 or 2 to 5 wherein the region in step (D) is at a pressure of between about $6.7 \times 10^3$ and about $9.1 \times 10^4$ Pa (about 2 to about 27 inches of mercury ) absolute.

7. The process of claims 1 or 2 to 6 wherein the foam body has a density between about 14.4 and about 32.0 kg/m$^3$ (between about 0.9 and about 2.0 pounds per cubic foot).

8. The process of claims 1 or 2 to 7 wherein such region in step (D) is formed by an elongated chamber with such mixture passing through a die at one end of such chamber wherein such die is a fan shape die having an arcuate slot orifice, and controlling the expansion of the mixture by arcuate rolls positioned above and below the plane of the arcuate slot orifice and such foam body passing through a pool of water at the opposite end of such chamber.

9. The process of claim 8 including the step of passing such mixture through a die at one end of such chamber, cooling such foam body in such chamber, and then passing such foam body from such chamber to atmosphere.

10. The process of claims 1 or 2 to 9 wherein the foam body has an average cell size of less than 0.5 mm.

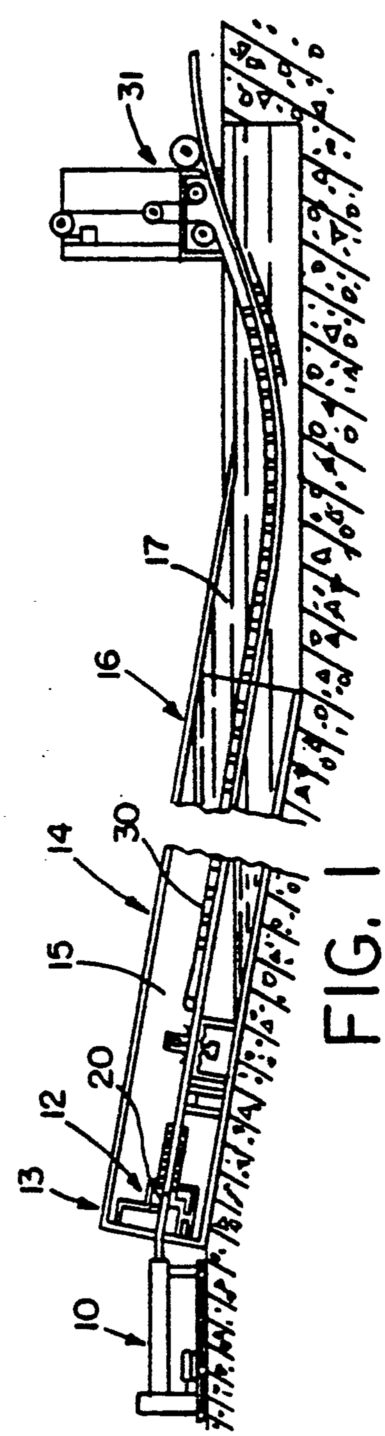


FIG. 1

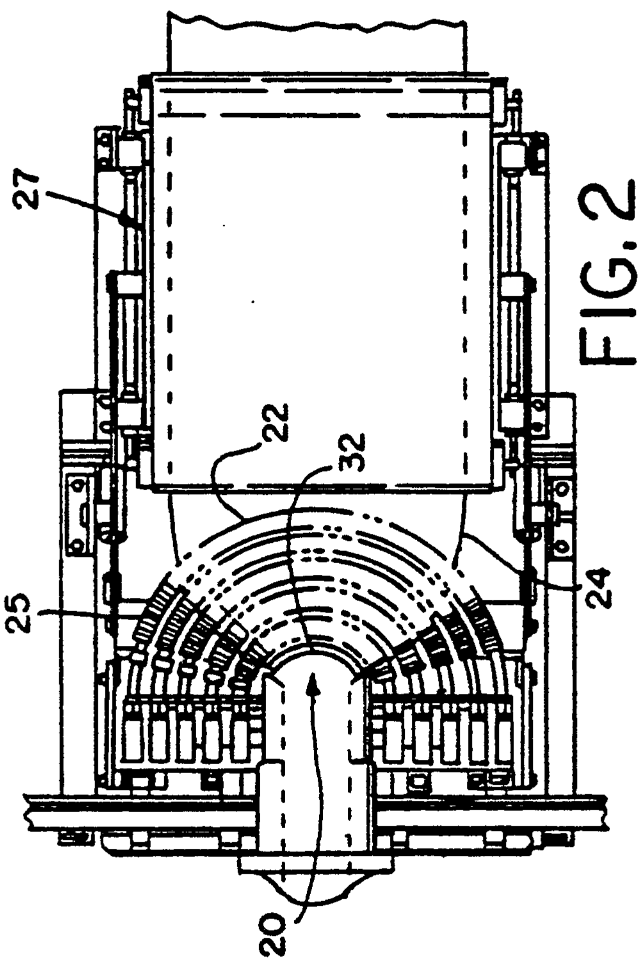


FIG. 2

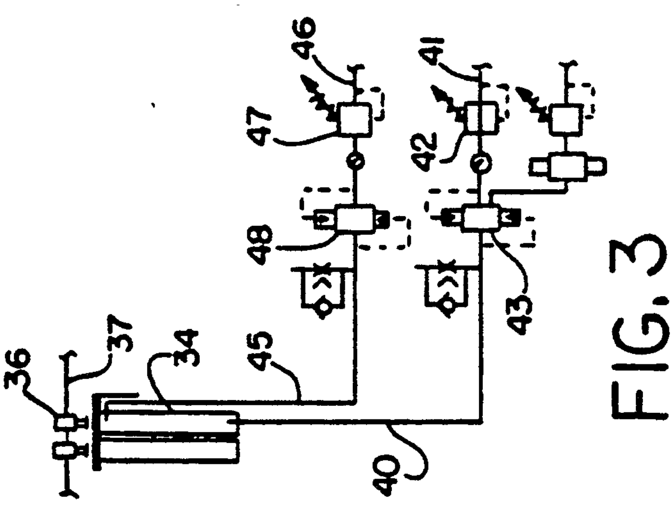


FIG. 3

European Patent Office

# EUROPEAN SEARCH REPORT

Application Number

EP 90 10 4158

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X<br><br>Y | EP-A-0 124 958 (MOBIL OIL CORP.)<br>* Claims 1,3-8; page 2, line 21 - page 3, line 15; examples 1,4 *<br>--- | 1,2,3,5,7<br><br>1,6,8,9 | C 08 J 9/14<br>C 08 L 101/00<br>B 29 C 67/22 |
| X | GB-A-1 143 558 (SHELL INTERNATIONALE RESEARCH MAATSCHAPPIJ N.V.)<br>* Claims 1-6,12; page 2, line 74 - page 3, line 33; examples *<br>--- | 1-5 | |
| D,Y | US-A-4 234 529 (A.L. PHIPPS)<br>* Claim 1; figure 2; column 2, lines 52-56 *<br>--- | 1,8,9 | |
| D,Y | US-A-4 364 722 (A.L. PHIPPS)<br>* Claim 1 *<br>--- | 1,8,9 | |
| D,Y | US-A-4 199 310 (A.L. PHIPPS)<br>* Figure 1; column 1, lines 4-10; claim 1 *<br>----- | 1,6,8,9 | |
| | | | TECHNICAL FIELDS SEARCHED (Int. Cl.5) |
| | | | C 08 J |

The present search report has been drawn up for all claims

| Place of search | Date of completion of the search | Examiner |
|---|---|---|
| THE HAGUE | 04-05-1990 | HALLEMEESCH A.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)